(19) **Europäisches Patentamt / European Patent Office / Office européen des brevets**

(11) **EP 1 936 401 A1**

(12) **EUROPEAN PATENT APPLICATION**

(43) Date of publication:
**25.06.2008 Bulletin 2008/26**

(51) Int Cl.:
*G01S 13/34* (2006.01)  *G01S 7/00* (2006.01)

(21) Application number: **06077312.4**

(22) Date of filing: **22.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Nederlandse Organisatie voor toegepast-natuurwetenschappelijk onderzoek TNO 2628 VK Delft (NL)**

(72) Inventors:
- **Janssen, Johannes Antonius Andreas 2614 JC Delft (NL)**
- **Elferink, Franciscus Hendrikus 2211 MR Noorwijkerhout (NL)**
- **Barrenechea Zabala, Peli 35006 Las Palmas de Gran Canaria (ES)**

(74) Representative: **van Loon, C.J.J. et al VEREENIGDE Johan de Wittlaan 7 2517 JR Den Haag (NL)**

(54) **Method and radar system for transmitting information**

(57) Method for transmitting information, comprising:
-providing a first radar signal generator (1), which provides a continuous wave radar signal (S1) having a first modulation;
-modulating the radar signal (S1) with the information, to be transmitted using a second modulation;
-transmitting the continuous wave radar signal (S1) modulated with the information;
-providing a first radar signal receiver (2), which seeks reflected continuous wave radar signal parts relating to the transmitted radar signal;
-providing a second radar signal receiver (3), receiving the transmitted continuous wave radar signal; and
-processing the continuous wave radar signal (S1), received by the second radar receiver (3), to obtain the information therefrom.

**EP 1 936 401 A1**

**Description**

The invention relates to a method and radar system for transmitting information.

It has been known for a long time, that a radar system can be used for communication purposes. For example, GB 247,126 discloses a radar system including means for generating radar signal pulses, and means for producing frequency modulation of the carrier frequency of the pulses in accordance with communication signals.

A more advanced prior art system is known from DE2808544A1, teaching to apply binary phase encoding of a message into an unmodulated radar pulse sequence (of a pulse Doppler radar), so that radar operation to detect targets can be achieved at the same time as transmission of messages. However, this system is relatively complex and expensive, and can only achieve relatively low data transfer rates.

The present invention aims to provide an improved method and radar system for transmitting information.

According to an embodiment, there is provided a method for transmitting information, comprising:

- providing a first radar signal generator, which provides a continuous wave radar signal having a first modulation;
- modulating the radar signal with the information, to be transmitted using a second modulation;
- transmitting the continuous wave radar signal modulated with the information;
- providing a first radar signal receiver, which seeks reflected continuous wave radar signal parts relating to the transmitted radar signal;
- providing a second radar signal receiver, receiving the transmitted continuous wave radar signal; and
- processing the continuous wave radar signal, received by the second radar receiver, to obtain the information therefrom.

Also, according to an embodiment, there is provided a radar system configured to transmit information during radar operation, particularly being configured to carry out the method according to the invention, the system comprising:

- a first radar signal generator, configured to provides a continuous wave radar signal having a first modulation;
- a modulator to modulate the radar signal, provided by the first radar signal generator with the information to be transmitted using a second modulation;
- a transmitter to transmit the continuous wave radar signal modulated with the information;
- a first radar signal receiver configured to receive reflected continuous wave radar signal parts relating to the transmitted radar signal;
- a second radar signal receiver, being spaced-apart from the first receiver, to receive the transmitted continuous wave radar signal; and
- the second radar signal receiver comprising a processor to process the continuous wave radar signal, received by the second radar receiver, to obtain the information therefrom.

The present method and system can provide a reliable means to communicate using radar signals, during radar operation, using relatively inexpensive means, wherein relatively high data rates (i.e. transmission of large amounts of information) can be achieved.

In a preferred embodiment, the first modulation of the continuous wave radar signal is a frequency modulated. For example, the frequency modulated continuous wave radar signal as such can comprise an array of subsequent radar signal parts, each radar signal part having a continuously rising and/or falling frequency, for example broadband signal parts, particularly a continuous array of chirps having linear frequency slopes (with slope angle $\alpha$). As an example, each subsequent radar signal part can be frequency modulated between a first (minimum) and second (maximum) frequency, having for example a certain high carrier frequency (for example at least in the MHz range or GHz range) and a relatively narrow bandwidth (for example below the MHz range, or below the GHz range in the case that the carrier frequency is in the GHz range).

In a more preferred embodiment, the second modulation of the radar signal, to modulate the signal with the information, is amplitude modulation. In this way, particularly, an FM radar signal can be AM modulated with information, to be transmitted, which can be carried out simply by the application of a suitable AM modulator. In case of a first radar signal receiver detecting radar targets, via radar signal reflections, interference between the AM information containing part and target detection information can be avoided in a simple manner. Also, a remote radar signal receiver can process the AM-FMCW (i.e. Amplitude Modulated Frequency Modulated Continuous Wave) radar signal to acquire the transmitted information there-from, using relatively inexpensive means. Particularly, the AM part in the transmitted radar signal can be demodulated there-from in a simple manner.

In an alternative embodiment, the second modulation of the radar signal, to modulate the signal with the information, can be a frequency modulation, for example by the application of a frequency modulator.

Also, an embodiment can provide digital machine readable instructions, particularly software code, configured to cause a machine to carry out a method according to the invention when executed by the machine, particularly to provide a system according to the invention.

Further advantageous embodiments of the invention are described in the dependent claims. These and other aspects of the invention will be apparent from and elucidated with reference to non-limiting embodiments described hereafter, shown in the drawings.

Figure 1 schematically depicts a system and respective method according to an embodiment of the invention;
Figure 2 shows a radar signal transmission/receiving part of the system shown in Fig. 1;
Figure 3 shows a target detection result of the transmission/receiving part of the system of Fig. 1;
Figure 4 shows a radar signal information receiving part of the system shown in Fig. 1;
Figure 5 shows a frequency spectrum of an example of a radar signal received by the information receiving part of Fig. 4;
Figure 6 shows an example of a processed radar signal spectrum, processed by the information receiving part of the system; and
Figure 7 depicts a further embodiment of the invention.

Corresponding or similar features are denoted by corresponding or similar reference signs in the present patent application.

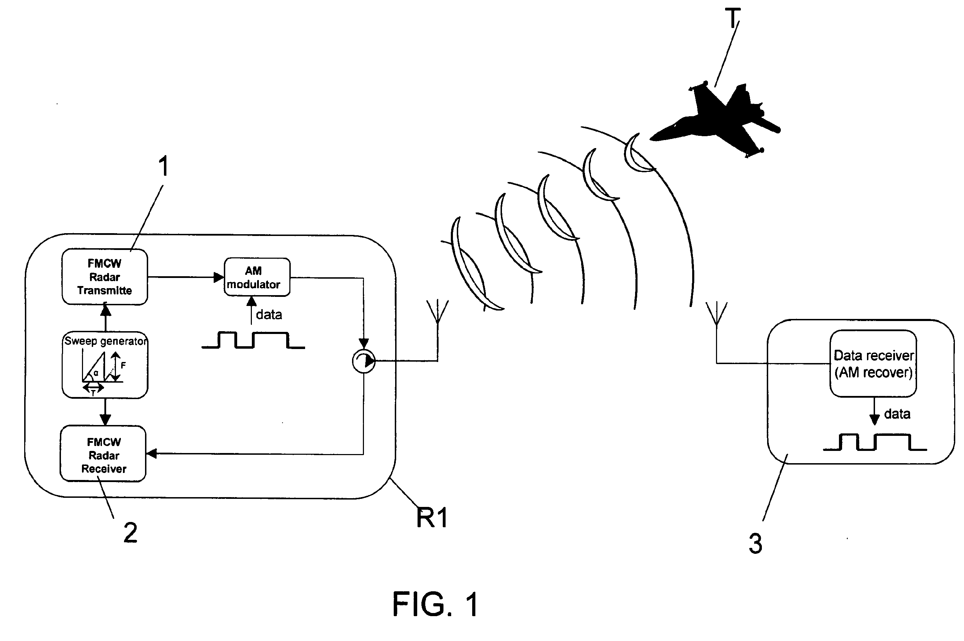

Figures 1-2 show a non-limiting embodiment of a radar system configured to transmit information during radar operation. According to a preferred embodiment, a primary part of the system is based on commonly known Frequency Modulated Continuous Wave (FMCW) radar technology. Thus, the radar system provides various advantages over, for example, pulsed Doppler radar systems, for example concerning the complexity and costs. Moreover, the present FMCW radar system can detect both location (i.e. distance) and velocity of a target T, as is known to the skilled person. Since FMCW radar technology as such is known from the prior art, its details will not be explained in the present patent application.

The present FMCW radar system has been adapted to provide a communication means as well, above its normal radar functionality. This will be explained in the following, regarding the embodiments shown in figures 1-7.

For example, the system can comprise a first radar signal generator 1, for example being part of a first radar station R1 (for example a mobile, movable or location-fixed radar unit), configured to provides a continuous wave radar signal S1 having a frequency modulation. The radar signal generator 1 is associated with a transmitter 7 to transmit the continuous wave radar signal S1, and with a first radar signal receiver 2 (being part of the first radar station R1, or at least being located near the first radar signal generator 1) configured to receive reflected continuous wave radar signal parts relating to the transmitted radar signal (as follows from Fig.1, one or more remote targets T can induce the mentioned reflected radar signals). In the present embodiment, the transmitter 7 is an antenna, which is also used for receiving reflected radar signals; alternatively, different antennas can be provided for the transmission and receiving of signals.

The frequency modulated continuous wave radar signal S1 as such can be frequency modulated in various ways. According to a simple and efficient embodiment, the first signal generator 1 is configured to generate a signal consisting of a continuous array of subsequent sine wave radar signal parts, each sine wave radar signal part for example having a continuously rising and/or falling frequency, for example broadband signal parts, particularly a continuous array of chirps (for example being frequency modulated between a minimum frequency F1 and maximum frequency F2). The radar system can also be called a "chirped radar system", using a linear chirp waveform.

In an embodiment, the FM modulated radar signal S1 can have a carrier wave frequency of about 1GHz (some GHz) or higher, however, other frequency ranges (for example in the MHz range) can also be applied if desired. Also, the frequency sweep F of the FM modulated radar signal can be in the range of about several Mhz up to several GHz, or be a different frequency sweep.

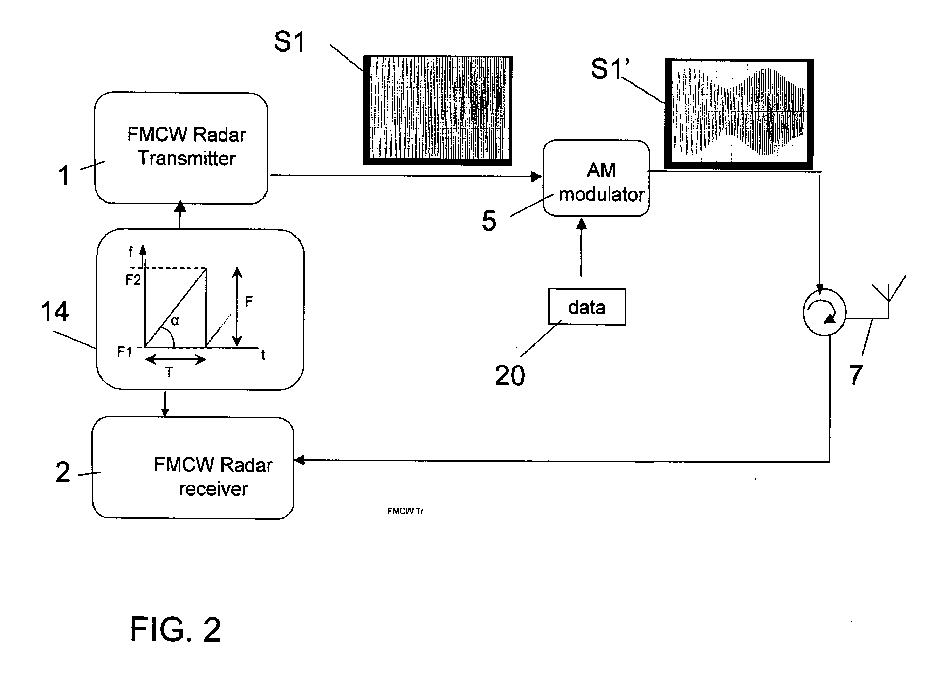

For example, the first radar signal generator 1 can comprise a first direct digital synthesizer (DDS), to generate a very stable radar signal. In a further embodiment the generator 1 comprises or is connected to a sweep generator 1a. In the present embodiment, the sweep generator 1a produces a continuous chirps wave, having linear slopes for each chirp between a minimum and maximum frequency (the frequency range, between a first frequency F1 and second frequency F2, i.e. the bandwidth of the signal, being indicated by an arrow F in Fig. 2), and a time period (length) of each chip being indicated by arrow T in Fig. 2. Each chirp preferably is a sine wave having a linearly changing frequency. An amplitude-time graph of a chirp of the resulting signal S1 is also shown in Fig. 2. The skilled person will appreciate that the mentioned direct digital synthesizer can be part of this sweep generator, or be connected thereto to drive the sweep generator 1a.

Also, in the present embodiment, the sweep generator 1a has been linked to the radar signal receiver 2. The radar signal receiver can use the signal provided by the sweep generator 1a in the processing of detected radar signal reflections, to detect targets (i.e. target distance and speed) as will be appreciated by the skilled person.

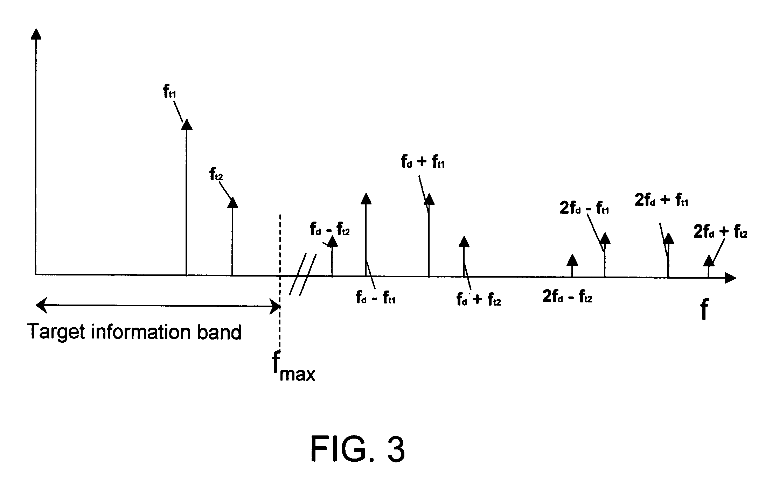

Figure 3 shows an example of an output that can be generated by the radar signal receiver 2, indicating a plot (spectrum) of frequency versus amplitude, wherein two target related frequency peaks $f_{t1}$ and $f_{t2}$, relating to two different targets can be discerned. Such target related peaks are also commonly known as "target beat notes". Due to its configuration, the radar system can discern targets up to a maximum beat note (in a target information band), which has been indicated by $f_{max}$ in Fig. 3.

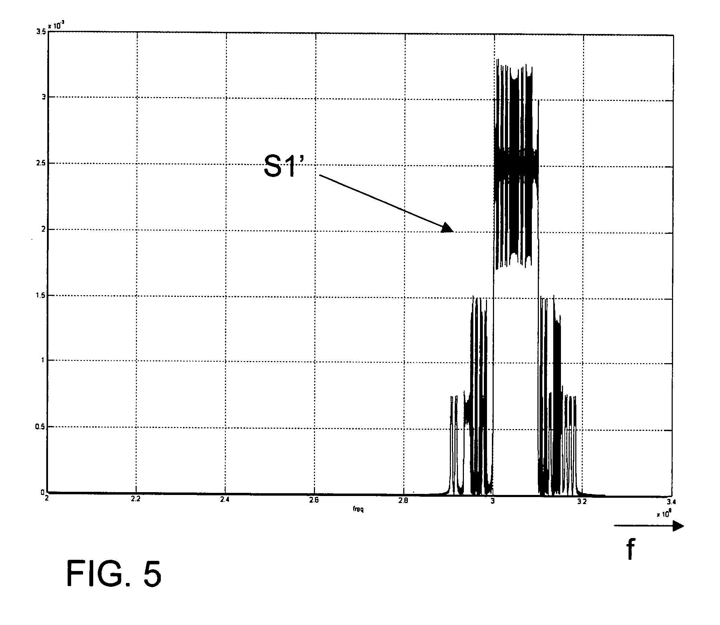

Then, according a preferred embodiment, the system also comprises a modulator 5 to modulate the FMCW radar signal S1, provided by the first radar signal generator 1 with the information to be transmitted using a second modulation. In the present embodiment, the modulator 5 is an amplitude modulator. Part of a resulting AM-FMCW modulated signal S1' has been depicted in Fig 2, in a time-amplitude diagram, and in Figure 5 in a frequency-spectrum. For example, the system can include one or more information providing or generating components 20, which can communicate or transmit information to be transmitted to the modulator 5 to modulate that information into the radar signal S1. Information (data) to be transmitted can involve many types of information, for example audio, video, multimedia, pictures, target related information and/or other information.

Besides, advantageously, the modulator 5 is configured to modulate the radar signal using an amplitude modulation data signal frequency $f_d$ satisfying the condition: $f_d > 2f_{max}$ (i.e., $f_d$ is larger than two times $f_{max}$). As a non-limiting example, in case the possible target frequencies are in the range of 1-100 kHz, the frequency $f_d$ of the AM modulation of the FMCW signal (leading to the AM-FMCW signal S1') is larger than 200 kHz. Using such relatively high data modulation frequencies can provide relatively large data transmission rates. Also, in a further embodiment (as is shown in fig. 2), the AM modulation can involve modulating an AM sinus wave (having the mentioned data signal frequency $f_d$ as carrier frequency, an having an amplitude that contains the information/data/message to be transmitted) to the FMCW signal.

Moreover, as follows from Fig. 3, the amplitude modulation of data into the FMCW radar signal can lead to data/target related peaks, being indicated by peaks $f_d - f_{t2}$, $f_d - f_{t1}$, $f_d + f_{t1}$ $f_d + f_t$, $2f_d - f_{t2}$, $2f_d - f_{t1}$, $2f_d + f_{t1}$ $2f_d + f_t$ in the radar target detection spectrum. However, due to the advantageous application of $f_d > 2f_{max}$, these peaks will generally lie above $f_{max}$ (in the detected signal spectrum), and are thus separated from true target related peaks $f_{t1}$, $f_{t2}$, (which lie below $f_{max}$) so that the AM modulation of the FMCW signal does not interfere with the primary radar operation of the system.

Besides, the system can include a second radar signal receiver 3 (see Fig 1), being spaced-apart from the first receiver 2 (i.e. from the first radar station R1), to receive the transmitted continuous wave radar signal. The second radar signal receiver 3 can be located in a position where it is desired to receive data or information from the first radar station R1. According to a non-limiting embodiment, the second radar signal receiver 3 can also be part of a (second) radar station, having its own radar signal transmission, receiving and processing components to detect targets, however this is not essential. The second radar signal receiver 3 can also be part of or be associated with units, devices or stations that have no further means to detect remote targets via radar technology. For example, the second receiver can comprise a suitable antenna 16 to receive radar signals S1'.

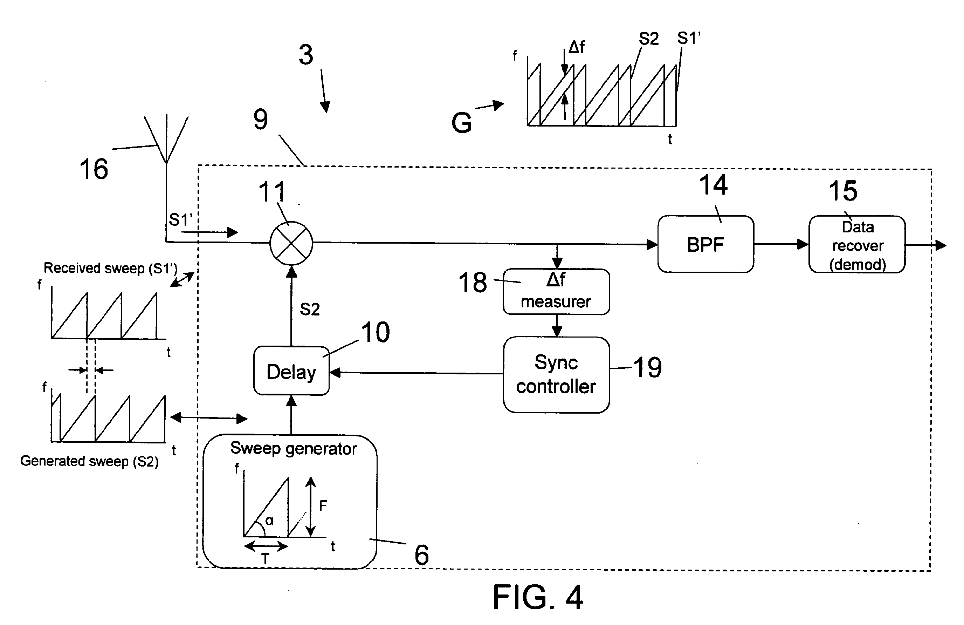

Figure 4 shows a further embodiment of the second receiver 3, and its operation. The second radar signal receiver 3 preferably comprises a processor 9 to process the continuous wave radar signal S1', received by the second radar receiver 3, to obtain the information therefrom. Particularly, the following configuration can provide AM information recovery by the receiver 3, in which a desired band limitation of the data signal can be achieved:

The processor 9 preferably comprises a second signal generator 6 configured to provide a second continuous wave signal S2 that has the same configuration as the radar signal S1 provided by the first radar generator 1.

For example, the second radar signal generator 6 can be configured to provide a second continuous wave radar signal S2 that has the same first modulation as the radar signal S1 provided by the first radar generator 1. Herein, preferably, the second radar signal generator 6 comprises a second direct digital synthesizer having the same configuration as the direct digital synthesizer of the first radar signal generator 1. In this way, the second radar generator 6 can preferably produce an exact copy of the FMCW signal generated by the first generator 1.

Also, the processor 9 preferably comprises a loop structure 10, 11, 18, 19 comprising synchronizing means 10, 18, 19, configured to synchronise the received signal S1' and the generated same signal S2, to delay the signals S1', S2 with respect to each other such that a frequency difference Δf (indicated in frequency-time graph G of Fig. 4) between the signals S1', S2 becomes and remains equal to an intermediate frequency IF.

For example, the loop part of the processor 9 can comprise a frequency-difference measuring unit 18 to measure the instantaneous frequency difference Δf between the received radar signal S1' and the locally generated second signal S2.

The loop can include an adjustable delayer 10, which can be connected to the frequency-difference measuring unit 18, for example via a synchronisation controller 19, to control the delaying of the signals S1', S2 based on the measurement results of the measuring unit 18. In this way, a feedback process/loop can be carried out to automatically provide a desired delaying of the received radar signal S1', having the information, and the locally generated second signal S2.

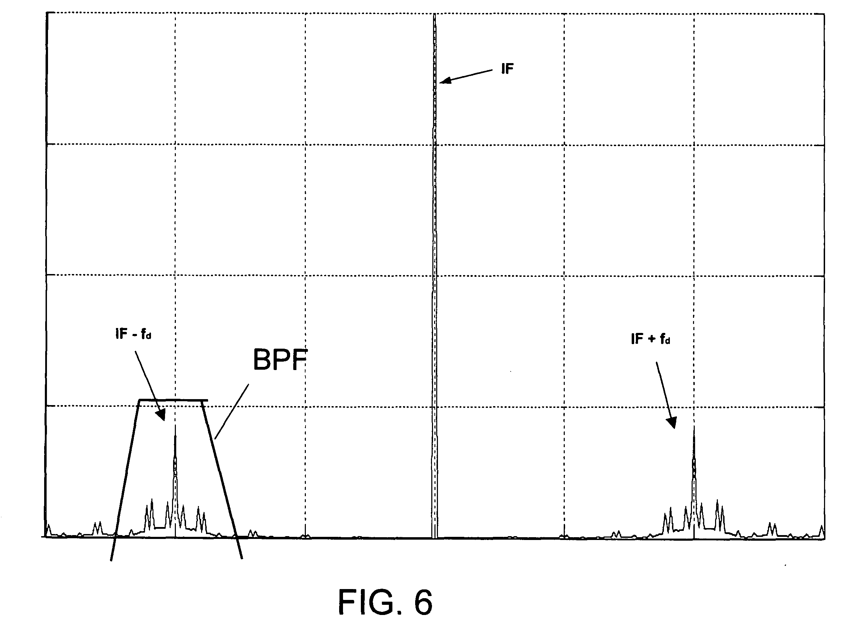

Besides, the loop part of the processor 9 can include a multiplier or mixer 11 configured to multiply/mix the thus delayed signals S1', S2. In the output spectrum of a resulting mixer signal, an information containing frequency band can be shifted from an intermediate frequency IF, the intermediate frequency being an intermediate (i.e. central) frequency in the frequency sweep F of the initial FM radar signal S1 (i.e. IF=(F2-F1)/2), as will be explained below. The spectrum of a resulting mixed signal is shown in Fig. 6.

Also, for example, the receiver 3 can comprise a bandpass filter 14 to filter separate an information containing frequency band part from the intermediate frequency. A bandpass filtering of the processes signal is being indicated by BPF in Fig. 6 (in the present case, the data containing part that has been shifted with minus $f_d$ from the intermediate frequency is being band-pass filtered from a remaining part of the spectrum).

Also, the processor 9 can include a demodulator 15 to demodulate the information containing frequency band to obtain the information therefrom. As follows from the drawing, the demodulator 15 can be located downstream with respect to the filter unit 14 to receive the filtered part BPF therefrom for further processing, to recover the information from that spectrum part.

Thus, in the receiver configuration of Fig. 4, the same sweep (S2) can be generated as in the remote radar transmitter in order to mix that sweep/signal S2 with the received signal S1', and fold the data/information back to low frequency. Preferably, the same DDS is used as in the remote transmitter station R1, in combination with the described loop structure 10, 11, 18, 19, to synchronize the received signal S1' and the locally generated sweep S2. The frequency difference Δf between both sweeps S1', S2 is being measured and the adjustable delayer 10 can be progressively tuned, such that a lock of the loop is achieved when the frequency difference Δf between both sweeps/signals S1', S2 is equal to the desired intermediate frequency IF. By band-pass filtering and simple demodulation, the data can be band limited first, and recovered thereafter (particularly when the loop lock has been achieved).

During operation the processor 9 of the receiver 3 can to control the loop structure and tune the frequency difference Δf between the receive signal S1' and the locally generated sweep S1 to the intermediate frequency IF. Once the loop is locked (i.e., IF= Δf), one component will appear in the mixer output spectrum (see Fig. 6) in the intermediate frequency IF, plus two data components (at Δf=$\pm f_d$ due to the mixing between Δf and the data signal). In this situation, by band-pass filtering one of these data components (IF-$f_d$ or IF+ $f_d$) the data can be easily recovered by simple demodulation (for example, a simple envelope detector would suffice).

The operation of the system also follows from Figures 1-6. During operation, the first radar station R1 can operate to detect (i.e. trying to find or locate) targets, by transmitting the first FMCW radar signal S1.

Also, during operation, information can be transmitted using the radar signals, for example to transmit a message to one or more remote receivers 3. To this aim, as follows from the drawings, modulating the FMCW radar signal S1 with the information, preferably via AM modulation, to obtain the AM-FMCW radar signal, which signal S1' is then being transmitted (for example via a suitable antenna 7).

The first radar signal receiver 2 can seek/detect reflected continuous wave radar signal parts, reflected from targets T, and relating to the transmitted radar signal S1'. Also, the first radar station R1 can process the detected radar echo's to obtain target information (see Fig. 3).

Each second radar signal receiver 3 can receive the transmitted continuous wave radar signal, and can process the continuous wave radar signal S1', by to obtain the information therefrom. Since the information has been AM modulated, a simple processing can be an envelop-detection processing, wherein the envelop of the amplitude of the detected AM-FMCW signal S1' is being determined.

In a preferred processing of the detected AM-FMCW signal S1', the second signal generator 6 provides the second continuous wave radar signal S2, as is depicted in the Fig. 4. The receiver 3 synchronises the received radar (data containing) signal S1' and the generated second signal (S2), by measuring the mentioned frequency difference Δf between both signals S1', S2, and delaying the signals S1', S2 with respect to each other so that the frequency difference Δf becomes equal to the mentioned intermediate frequency IF. For example, in the present embodiment, it is the second signal S2 that is being delayed with respect to the information containing received radar signal S1' (alternatively, for example, is the received signal S1' can be delayed with respect to the second signal S2).

As follows from the above, the delaying is preferably such that in the resulting mixed signal, the information containing frequency band has been be shifted from the intermediate radar frequency IF, to obtain a spectrum as shown in Fig. 6. For example, the frequency-difference measuring unit 18 can measure instantaneous frequency differences Δf between the received radar signal S1' and the locally generated second signal S2, and the synchronisation controller 19 can control the delaying of the signals based on the measurement results of the measuring unit 18, to obtain the desired delay (particularly in an iterative or continuous feedback process)

Then, the bandpass filter 14 and demodulator 15 can recover the information from the mixed signal as has been indicated above, in a relatively simple manner, to obtain the information therefrom.

The method and system according to the invention can be used in many different applications, for example in military and/or civilian applications. In an embodiment, the method and system according to the invention can be used in a traffic regulation and/or controlling system.

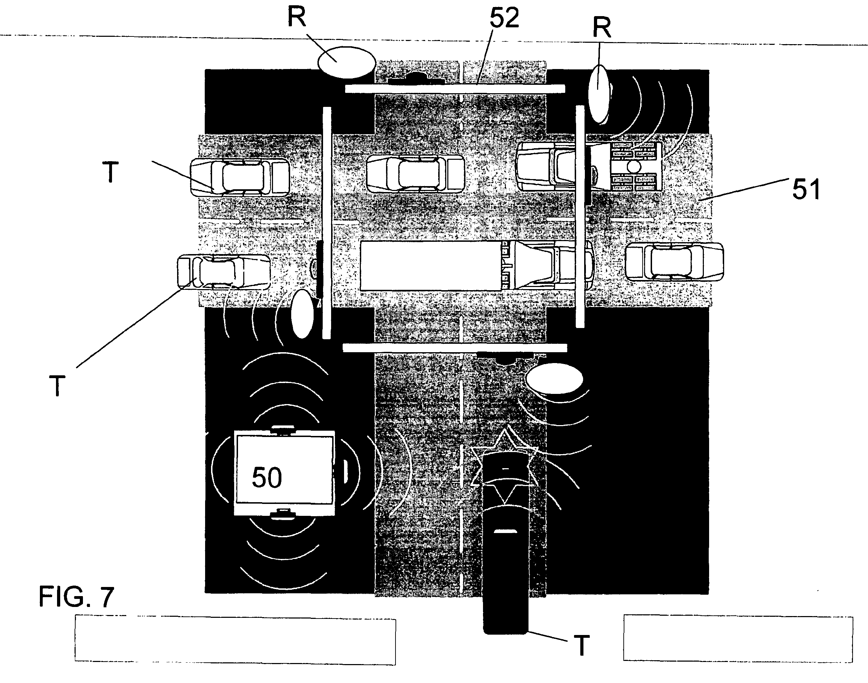

For example, Fig. 7 shows a traffic regulation and/or controlling system comprising a traffic controller 50. Besides, the traffic regulation and/or controlling can include one or more radar units R, configured to emit radar signals to part of a road 51, and to detect radar reflections relating to passing traffic targets T (for example vehicles, trucks and/or other traffic or transportation means). For example, each radar unit can have a configuration that is the same as or similar to the configuration of a first radar signal station R1 as shown in Figures 1-2. Preferably, each traffic radar R can be configured to transmit information during radar operation, and can comprise a mentioned first radar signal generator, a mentioned a modulator to modulate the radar signal and a transmitter to transmit the continuous wave radar signal modulated with the information, and preferably also with a mentioned first radar signal receiver configured to receive reflected continuous wave radar signal parts relating to the transmitted radar signal.

For example, in an embodiment, each traffic radar station R can be configured to modulate information into a respective radar signal, which information relates to traffic T that has been detected by that specific radar station, for example information to the location and/or speed of the detected traffic

In one embodiment, a central traffic controller 50 can be configured to receive the modulated radar signals that are transmitted by the one or more radar stations R. For example, the traffic controller 50 can have a configuration that is the same as or similar to the configuration of the second receiver of the embodiment of Figures 1-6. Particularly, the central controller 50 can have a second radar signal receiver receive the transmitted continuous wave radar signal; and comprising a processor to process the continuous wave radar signal, received by the second radar receiver, to obtain the information (for example speeds and/or locations of detected targets T) therefrom.

Thus, the central controller 50 can control the traffic T, for example by adjusting or controlling respective traffic signs 52 associated with the road 51, depending on the information received by the various radar stations concerning speeds and/or locations of traffic T.

Thus, advantageously, a method and/or system according to the invention can be used to detect vehicles on roads. In an other embodiment, which may be combined with the embodiment of Fig. 7 is desired, the method and/or system can be used to transmit information to passing vehicles T. For example, to that aim at least one of the vehicles T can be provided with a mentioned second radar signal receiver to receiving the transmitted continuous wave radar signal. In this way, for example, information containing local points of interest, advertisement, navigation information, news, weather road use information and/or other information can be transmitted to the target vehicles T.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims. Also, a single processor, controller or other unit may fulfil functions of several means recited in the claims, and/or several processors, controllers or other units may fulfil one or more of means recited in the claims.

**Claims**

1. Method for transmitting information, comprising:

   - providing a first radar signal generator (1), which provides a continuous wave radar signal (S1) having a first modulation;
   - modulating the radar signal (S1) with the information, to be transmitted using a second modulation;
   - transmitting the continuous wave radar signal (S1) modulated with the information;
   - providing a first radar signal receiver (2), which seeks reflected continuous wave radar signal parts relating to the transmitted radar signal;
   - providing a second radar signal receiver (3), receiving the transmitted continuous wave radar signal; and
   - processing the continuous wave radar signal (S1'), received by the second radar receiver (3), to obtain the information therefrom.

2. The method according to claim 1, wherein the first modulation of the continuous wave radar signal (S1) is a frequency modulated.

3. The method according to claim 2, wherein the frequency modulated continuous wave radar signal (S1) as such comprises an array of subsequent radar signal parts, each radar signal part having a continuously rising and/or falling frequency, for example broadband signal parts, particularly a continuous array of chirps.

4. The method according to any of the claims 2-3, wherein the second modulation of the radar signal (S1), to modulate the signal with the information, is amplitude modulation.

5. The method according to claim 4, wherein an amplitude modulation data signal frequency $f_d$ satisfies the condition:

$$f_d > 2f_{max}$$

   wherein $f_{max}$ is a maximum target beat frequency that can be detected.

6. The method according to any of the claims 4-5, wherein the processing of the continuous wave radar signal (S1'), received by the second radar receiver

(3), to obtain the transmitted information there-from comprises:

- providing a second continuous wave signal (S2) that is the same as the continuous wave signal (S1) provided in the first radar signal generator (1); and
- synchronizing the received signal (S1') and the generated second signal (S2), by measuring a frequency difference ($\Delta f$) between both signals (S1', S2), and delaying the signals (S1', S2) with respect to each other, such, that the frequency difference ($\Delta f$) becomes equal to an intermediate frequency (IF).

7. The method according to claim 6, comprising demodulating an information containing frequency band to obtain the information therefrom.

8. The method according to any of the claims 1-3, wherein the second modulation of the radar signal (S1), to modulate the signal with the information, is a frequency modulation.

9. A radar system configured to transmit information during radar operation, comprising:

- a first radar signal generator (1), configured to provides a continuous wave radar signal (S1) having a first modulation;
- a modulator (5) to modulate the radar signal (S1), provided by the first radar signal generator (1) with the information to be transmitted using a second modulation;
- a transmitter (7) to transmit the continuous wave radar signal (S1) modulated with the information;
- a first radar signal receiver (2) configured to receive reflected continuous wave radar signal parts relating to the transmitted radar signal;
- a second radar signal receiver (3), being spaced-apart from the first receiver (2), to receive the transmitted continuous wave radar signal; and
- the second radar signal receiver (3) comprising a processor (9) to process the continuous wave radar signal (S1), received by the second radar receiver (3), to obtain the information therefrom.

10. The system according to claim 9, wherein the first signal generator (1) is configured to generate a frequency modulated radar signal (S1), preferably a signal comprising an array of chirps.

11. The system according to any of the claims 10, wherein the modulator (5) is an amplitude modulator

12. The system according to claim 11, wherein the modulator (5) is configured to modulate the radar signal using an amplitude modulation data signal frequency $f_d$ satisfying the condition:

$$f_d > 2f_{max}$$

wherein $f_{max}$ is a maximum frequency of a maximum target beat frequency that can be detected by the system.

13. The system according to any of the claims 11-12, wherein the processor (9) comprises:

- a second signal generator (6) configured to provide a second continuous wave signal (S2) that has the same configuration as the radar signal (S1) provided by the first radar generator (1);
- a loop structure comprising synchronizing means (10, 18, 19), configured to synchronizing the received signal (S1') and the generated same signal (S2), to delay the signals (S1', S2) with respect to each other such that a frequency difference ($\Delta f$) between the signals (S1', S2) is equal to an intermediate frequency (IF); and
- a multiplier or mixer (11) configured to multiply/mix the thus delayed signals (S1', S2).

14. The system according to claim 13, wherein the processor (9) comprises a bandpass filter (BPF) to filter separate an information containing frequency band part from the intermediate frequency (IF).

15. The system according to claim 13 or 14, the processor (9) comprising a demodulator to demodulate an information containing frequency band to obtain the information therefrom.

16. The system according to any of claims 13-15, wherein the first radar signal generator (1) comprise a first direct digital synthesizer, wherein the second radar signal generator (6) comprises a second direct digital synthesizer having the same configuration as the direct digital synthesizer of the first radar signal generator (1).

17. The system according to any of the claims 11-16, wherein the AM modulation involves modulating a sinus wave containing the information, to be transmitted, to the continuous wave radar signal.

18. A traffic regulation and/or controlling system being provided with a system according to any of the claims 9-17.

19. Use of a method according to any of the claims 1-8 to detect vehicles on roads and to transmit information to those vehicles, wherein at least one of the vehicles is being provided with a mentioned second radar signal receiver to receiving the transmitted continuous wave radar signal.

**20.** Transport means, for example a car or truck, comprising a second radar signal receiver of the system according to any of the claims 9-17.

**21.** A machine readable program comprising machine readable code for performing a method according to any of the claims 1-8 when the program is being executed by a machine for executing such code.

FIG. 1

FIG. 2

EP 1 936 401 A1

FIG. 3

FIG. 4

FIG. 5

FIG. 6

FIG. 7

European Patent
Office

## EUROPEAN SEARCH REPORT

Application Number

EP 06 07 7312

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 291 309 A (SPILLER BASIL H R ET AL) 22 September 1981 (1981-09-22) | 1-4, 9-11, 17-21 | INV. G01S13/34 G01S7/00 |
| Y | * abstract; figures 1,2 * | 5,12 | |
| A | * column 1, line 31 - line 55 * | 6,7, 13-16 | |
| | * column 2, lines 1-18 * * column 4, lines 17-40 * ----- | | |
| X | US 2003/115015 A1 (KOSOWSKY LESTER H [US] ET AL) 19 June 2003 (2003-06-19) * abstract; figures 1a,1b * * paragraphs [0004], [0019] * ----- | 1,8,9,21 | |
| Y | EP 1 672 386 A (SIEMENS AG [DE]) 21 June 2006 (2006-06-21) | 5,12 | |
| A | * abstract * | 1-4, 6-11, 13-15 | |
| | * paragraphs [0011], [0019], [0027], [0032], [0034], [0035], [0042], [0050], [0051], [0054] * ----- | | TECHNICAL FIELDS SEARCHED (IPC) G01S |
| A | WO 2004/059561 A (SIEMENS AG [DE]; GILA JANOS [AT]; KONRAD WOLFGANG [AT]; RENNER ALEXAND) 15 July 2004 (2004-07-15) * abstract; figure 4 * * page 7, line 20 - page 8, line 26 * ----- | 1-3,6,7, 9,10, 13-15 | |
| A | US 2002/003488 A1 (LEVIN MOSHE [IL] ET AL) 10 January 2002 (2002-01-10) * abstract; figure 2 * * paragraphs [0010], [0050] - [0052] * ----- | 1,9, 18-20 | |

-/--

The present search report has been drawn up for all claims

| Place of search | Date of completion of the search | Examiner |
|---|---|---|
| The Hague | 29 June 2007 | Vial, Antoine |

EPO FORM 1503 03.82 (P04C01)

**European Patent
Office**

**EUROPEAN SEARCH REPORT**

Application Number

EP 06 07 7312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 733 238 A (FIDEN WILLIAM H [US]) 22 March 1988 (1988-03-22) * abstract; figures 1,2 * * column 1, lines 38-54 * * column 2, lines 11-18 * * column 5, line 64 - column 6, line 11 * ----- | 1,6,7,9, 13-15 | |
| | | | TECHNICAL FIELDS SEARCHED (IPC) |

The present search report has been drawn up for all claims

| Place of search | Date of completion of the search | Examiner |
|---|---|---|
| The Hague | 29 June 2007 | Vial, Antoine |

EPO FORM 1503 03.82 (P04C01)

## ANNEX TO THE EUROPEAN SEARCH REPORT
## ON EUROPEAN PATENT APPLICATION NO.

EP 06 07 7312

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2007

| Patent document cited in search report | | Publication date | Patent family member(s) | | Publication date |
|---|---|---|---|---|---|
| US 4291309 | A | 22-09-1981 | EP | 0008865 A1 | 19-03-1980 |
| | | | GB | 2035743 A | 18-06-1980 |
| US 2003115015 | A1 | 19-06-2003 | JP | 2003222671 A | 08-08-2003 |
| EP 1672386 | A | 21-06-2006 | NONE | | |
| WO 2004059561 | A | 15-07-2004 | AU | 2003292235 A1 | 22-07-2004 |
| | | | DE | 10261097 A1 | 15-07-2004 |
| US 2002003488 | A1 | 10-01-2002 | NONE | | |
| US 4733238 | A | 22-03-1988 | DE | 3789864 D1 | 23-06-1994 |
| | | | DE | 3789864 T2 | 01-09-1994 |
| | | | EP | 0289549 A1 | 09-11-1988 |
| | | | ES | 2005438 A6 | 01-03-1989 |
| | | | IL | 84240 A | 16-08-1991 |
| | | | JP | 1501418 T | 18-05-1989 |
| | | | WO | 8804061 A1 | 02-06-1988 |

EPO FORM P0459

For more details about this annex : see Official Journal of the European Patent Office, No. 12/82

EP 1 936 401 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 247126 A

- DE 2808544 A1